# EUROPÄISCHE PATENTSCHRIFT

(11) **EP 2 803 923 B1**
(45) Veröffentlichungstag und Bekanntmachung des Hinweises auf die Patenterteilung: **29.11.2017**
(21) Anmeldenummer: 13196848.9
(22) Anmeldetag: 12.12.2013
(51) Int. Cl.: F25B 15/04, F25B 15/00, F25B 27/02

(54) **Absorptionsprozess und -maschine**
Absorption process and machine
Procédé et machine d'absorption

(30) Priorität: 15.05.2013 EP 13167873
(43) Veröffentlichungstag der Anmeldung: 19.11.2014
(73) Patentinhaber: Ago Ag Energie + Anlagen, 95326 Kulmbach (DE)
(72) Erfinder: Ramming, Klaus, 95336 Mainleus (DE)
(74) Vertreter: Bauer, Dirk

(56) Entgegenhaltungen:
- EP-A1- 2 584 287
- EP-A2- 1 286 121
- WO-A1-2011/134129
- CN-A- 102 706 026
- DE-A1-102004 056 484
- FR-A1- 2 481 362
- JP-A- H07 139 844
- DATABASE WPI Week 200956 12. August 2009 (2009-08-12) Thomson Scientific, London, GB; AN 2009-M81486 XP002715221, -& CN 101 504 216 A (LI H) 12. August 2009 (2009-08-12)
- DATABASE WPI Week 200871 10. September 2008 (2008-09-10) Thomson Scientific, London, GB; AN 2008-M03920 XP002715222, -& CN 101 261 054 A (UNIV QINGHUA) 10. September 2008 (2008-09-10)

## Beschreibung

Die Erfindung betrifft einen Absorptionsprozess zur Nutzung von Abwärme aus einem Blockheizkraftwerk, wobei auf einem Niederdruckniveau eine arme wässrige Lösung mit verdampften Ammoniak als Arbeitsmittel angereichert und die angereicherte Lösung von dem Niederdruckniveau auf ein Mitteldruckniveau verdichtet wird, auf dem Mitteldruckniveau einer wässrigen Spenderlösung ein erster Wärmestrom aus der Abwärme zugeführt, gasförmiges Ammoniak als Spenderarbeitsmittel aus der Spenderlösung abgeschieden, die angereicherte Lösung mit dem Spenderarbeitsmittel zu einer reichen Lösung weiter angereichert, die reiche Lösung von dem Mitteldruckniveau auf ein Hochdruckniveau verdichtet und die arme Lösung auf das Niederdruckniveau entspannt wird, und auf dem Hochdruckniveau die reiche Lösung mittels eines zweiten Wärmestroms aus der Abwärme erhitzt und in das Arbeitsmittel in gasförmigem Aggregatzustand und eine abgereicherte Lösung getrennt, das gasförmige Arbeitsmittel auf das Niederdruckniveau entspannt und die abgereicherte Lösung auf das Mitteldruckniveau entspannt wird. Weiterhin betrifft die Erfindung eine Absorptionsmaschine zur Nutzung von Abwärme aus einem Blockheizkraftwerk umfassend auf einem Niederdruckniveau einen Niederdruckabsorber zum Anreichern einer armen wässrigen Lösung mit verdampften Ammoniak als Arbeitsmittel und eine Niederdruckpumpe zum Verdichten der angereicherten Lösung von dem Niederdruckniveau auf ein Mitteldruckniveau, auf dem Mitteldruckniveau einen Mitteldruckabscheider zum Abscheiden gasförmigen Ammoniaks als Spenderarbeitsmittels aus der Spenderlösung durch Zuführen eines ersten Wärmestroms aus der Abwärme, einen Mitteldruckabsorber zum weiteren Anreichern der angereicherten Lösung mit dem Spenderarbeitsmittel zu einer reichen Lösung, eine Mitteldruckpumpe zum Verdichten der reichen Lösung von dem Mitteldruckniveau auf ein Hochdruckniveau und ein Mitteldrucklösungsventil zum Entspannen der armen Lösung auf das Niederdruckniveau, und auf dem Hochdruckniveau einen Austreiber zum Erhitzen der reichen Lösung mittels eines zweiten Wärmestroms aus der Abwärme, einen Hochdruckabscheider zum Trennen der reichen Lösung in das Arbeitsmittel in gasförmigem Aggregatzustand und eine abgereicherte Lösung und ein Hochdrucklösungsventil zum Entspannen der abgereicherten Lösung auf das Mitteldruckniveau.

Gegenüber der Kompressionskältemaschine substituiert die "minderwertige" thermische Energieform der Niedertemperaturabwärme in einer solchen Absorptionsmaschine die Verwendung mechanischer Antriebe - also elektrischer Antriebe oder Verbrennungsmotoren. In der Absorptionsmaschine kommen mechanische Antriebe im Wesentlichen nur noch zum Antrieb der Lösungspumpe zwischen Absorber und Austreiber zum Einsatz.

Um einen Absorptionsprozess und eine Absorptionsmaschine der vorgenannten Art zu realisieren, wird in DE 10 2004 056 484 A1 vorgeschlagen, dass auf dem Mitteldruckniveau aus der angereicherten Lösung ein Bypassstrom als Spenderlösung ausgekoppelt und unter Wärmezufuhr in das Spenderarbeitsmittel und die arme Lösung getrennt und diese mit der aus dem Hochdruckniveau abgeführten armen Lösung zusammengeführt wird.

Die für das Pumpen der angereicherten Lösung auf das Mitteldruckniveau aufgewendete mechanische Energie und die vor dem Abscheiden in den Bypassstrom eingekoppelte Wärme tragen auf den Hochdruckniveau nur entsprechend dem Anteil des herausgetrennten Spenderarbeitsmittels zum weiteren Prozess bei. Der Anteil dieser aufgewendeten Energie, der der aus der Spenderlösung abgetrennten armen Lösung entspricht, wird nicht genutzt und vermindert die energetische Effizienz des Absorptionsprozesses.

### Aufgabe

Der Erfindung liegt die Aufgabe zugrunde, die energetische Effizienz des Absorptionsprozesses zu erhöhen.

### Lösung

Ausgehend von dem bekannten Absorptionsprozess wird nach der Erfindung vorgeschlagen, dass auf dem Mitteldruckniveau die abgereicherte Lösung als Spenderlösung in das Spenderarbeitsmittel und die arme Lösung getrennt wird. In dem erfindungsgemäßen Absorptionsprozess wird als Spenderlösung kein Bypassstrom aus der mit der Niederdruckpumpe geförderten angereicherten Lösung ausgekoppelt. Gegenüber dem Stand der Technik ist in dem erfindungsgemäßen Absorptionsprozess bei gleicher Leistung der Volumenstrom der angereicherten Lösung etwa auf die Hälfte reduziert. Auch muss der Spenderlösung keine Wärme zugeführt werden, um das Spenderarbeitsmittel abzuscheiden. Beides vermindert gegenüber dem Stand der Technik signifikant den Energieaufwand zum Betrieb des erfindungsgemäßen Absorptionsprozesses und steigert dessen energetische Effizienz. Durch die Verwendung von Ammoniak als Arbeitsmittel können Nutztemperaturbereiche bis -30 °C erreicht werden.

Bevorzugt wird im Rahmen eines erfindungsgemäßen Absorptionsprozesses Wärme aus der abgereicherten Lösung auf dem Mitteldruckniveau in die reiche Lösung auf dem Hochdruckniveau übertragen. Die abgereicherte Lösung auf dem Mitteldruckniveau weist nahezu noch das hohe Temperaturniveau der reichen Lösung nach Austritt aus dem Austreiber auf und muss vor Eintritt in den Absorber abgekühlt werden, um möglichst viel Arbeitsmittel aufnehmen zu können. Durch Übertragen eines Teils dieser Wärme in die reiche Lösung auf dem Hochdruckniveau - also vor Eintritt in den Austreiber - wird entsprechend die im Austreiber aufzuwendende Heizenergie vermindert.

Vorzugsweise wird im Rahmen eines erfindungsgemäßen Absorptionsprozesses auf dem Mitteldruckniveau der abgereicherten Lösung Wärme zugeführt. In einem solchen erfindungsgemäßen Absorptionsprozess wird das Spenderarbeitsmittel leichter aus der Spenderlösung abgeschieden und es kann der Wärmeträger der Heizwärme weiter ausgekühlt werden.

In einer vorteilhaften Ausprägung wird im Rahmen eines erfindungsgemäßen Absorptionsprozesses auf dem Mitteldruckniveau ein Bypassstrom der reichen Lösung in die angereicherte Lösung geführt. Über die Steuerung des Bypassstroms kann die Temperatur der reichen Lösung, die von der reichen Lösung im Austreiber aufgenommene Wärme und damit unmittelbar die Temperatur des Wärmeträgers am Austritt aus dem Austreiber eingestellt werden.

Besonders bevorzugt wird im Rahmen eines erfindungsgemäßen Absorptionsprozesses auf dem Mitteldruckniveau aus der angereicherten Lösung Wärme abgeführt. In einem solchen erfindungsgemäßen Absorptionsprozess nimmt die angereicherte Lösung das Spenderarbeitsmittel leichter auf.

In einer Ausprägung eines erfindungsgemäßen Absorptionsprozesses als Absorptionskälteprozess wird das gasförmige Arbeitsmittel auf dem Hochdruckniveau abgekühlt und verflüssigt, von dem Hochdruckniveau auf das Niederdruckniveau entspannt und auf dem Niederdruckniveau erhitzt und verdampft.

Alternativ kann ein erfindungsgemäßer Absorptionsprozess als Kraftprozess ausgeprägt sein, wobei das gasförmige Arbeitsmittel in einer Turbine von dem Hochdruckniveau auf das Niederdruckniveau entspannt wird und beispielsweise über einen Generator elektrische Energie erzeugt.

Ausgehend von der bekannten Absorptionsmaschine wird erfindungsgemäß vorgeschlagen, dass in dem Mitteldruckabscheider die abgereicherte Lösung als Spenderlösung in das Spenderarbeitsmittel und die arme Lösung getrennt wird. Die erfindungsgemäße Absorptionsmaschine setzt einen erfindungsgemäßen Absorptionsprozess um und zeichnet sich gleichermaßen durch dessen vorstehend aufgeführte Vorteile aus.

In einer Ausprägung einer erfindungsgemäßen Absorptionsmaschine als Absorptionskältemaschine weist diese einen Kondensator auf dem Hochdruckniveau zum Abkühlen und Verflüssigen des gasförmigen Arbeitsmittels, ein Hochdruckarbeitsmittelventil zum Entspannen des verflüssigten Arbeitsmittels auf das Niederdruckniveau und einen Verdampfer auf dem Niederdruckniveau zum Erhitzen und Verdampfen des flüssigen Arbeitsmittels auf.

### Ausführungsbeispiele

Die Erfindung wird nachfolgend anhand von Ausführungsbeispielen erläutert. Es zeigen
- Fig. 1a: eine Prinzipskizze einer ersten Absorptionsmaschine aus dem Stand der Technik,
- Fig.: 1b eine Prinzipskizze des Mitteldruckniveaus einer zweiten Absorptionsmaschine aus dem Stand der Technik,
- Fig. 2: eine Prinzipskizze einer ersten erfindungsgemäßen Absorptionsmaschine und
- Fig. 3: eine Prinzipskizze einer zweiten erfindungsgemäßen Absorptionsmaschine.

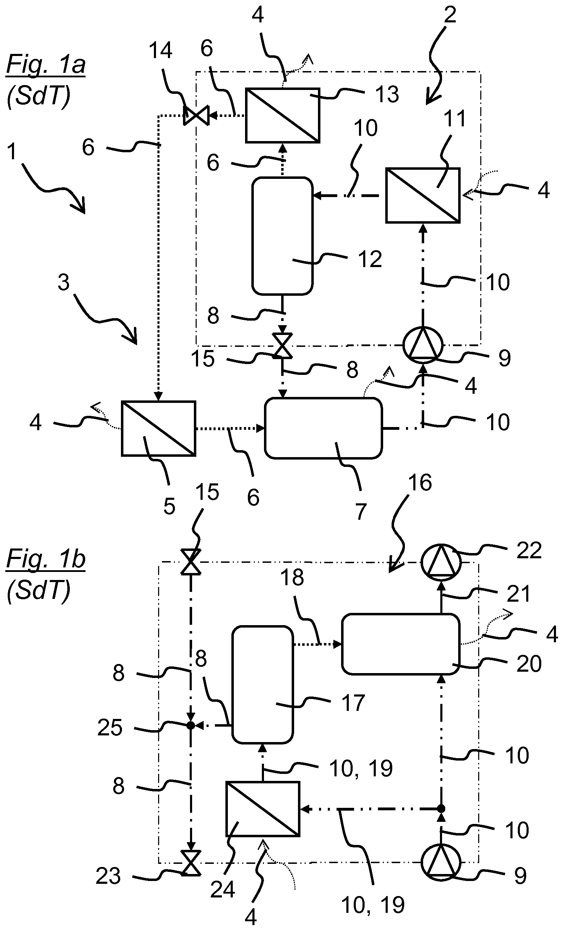

Die in Figur 1a skizzierte erste Absorptionsmaschine 1 aus dem Stand der Technik weist ein Hochdruckniveau 2 (innerhalb der strichpunktierten Linie) und ein Niederdruckniveau 3 (außerhalb der strichpunktierten Linie) auf. Für die Funktion wesentliche Wärmeströme 4 sind durch punktierte Pfeile dargestellt.

Im Niederdruckniveau 3 weist die erste Absorptionsmaschine 1 einen Verdampfer 5 zum Erhitzen und Verdampfen eines flüssigen Arbeitsmittels 6 (punktierte Pfeile), einen Niederdruckabsorber 7 zum Anreichern einer abgereicherten Lösung 8 (gestrichelte Pfeile) mit dem verdampften Arbeitsmittel 6 und eine Niederdruckpumpe 9 zum Verdichten der angereicherten Lösung 10 (strichpunkt-punktierte Pfeile) von dem Niederdruckniveau 3 auf das Hochdruckniveau 2 auf.

Auf dem Hochdruckniveau 2 weist die erste Absorptionsmaschine 1 einen Austreiber 11 zum Erhitzen der angereicherten Lösung 10, einen Hochdruckabscheider 12 zum Trennen der angereicherte Lösung 10 in das Arbeitsmittel 6 in gasförmigem Aggregatzustand und die abgereicherte Lösung 8, einen Kondensator 13 zum Abkühlen und Verflüssigen des gasförmigen Arbeitsmittels 6, ein Hochdruckarbeitsmittelventil 14 zum Entspannen des verflüssigten Arbeitsmittels 6 auf das Niederdruckniveau 3 und ein Hochdrucklösungsventil 15 zum Entspannen der abgereicherten Lösung 8 auf das Niederdruckniveau 3 auf.

Die in DE 10 2004 056 484 A1 vorgeschlagene zweite aus dem Stand der Technik bekannte Absorptionsmaschine erweitert die erste bekannte Absorptionsmaschine 1 an der Schnittstelle zwischen Hochdruckniveau 2 und Niederdruckniveau 3 um das in Figur 1b gezeigte Mitteldruckniveau 16.

Auf dem Mitteldruckniveau 16 weist die zweite Absorptionsmaschine einen Mitteldruckabscheider 17 zum Abscheiden eines gasförmigen Spenderarbeitsmittels 18 aus einer Spenderlösung 19, einen Mitteldruckabsorber 20 zum weiteren Anreichern der angereicherten Lösung 10 mit dem Spenderarbeitsmittel 18 zu einer reichen Lösung 21 (durchgezogene Pfeile), eine Mitteldruckpumpe 22 zum Verdichten der reichen Lösung 21 von dem Mitteldruckniveau 16 auf das Hochdruckniveau 2 und ein Mitteldrucklösungsventil 23 zum Entspannen der abgereicherten Lösung 8 auf das Niederdruckniveau 3 auf.

In der zweiten Absorptionsmaschine wird die Spenderlösung 19 hinter der Niederdruckpumpe 9 aus der angereicherten Lösung 10 abgezweigt, in einem Austreiber 24 aufgewärmt und in dem Mitteldruckabscheider 17 in das Spenderarbeitsmittel 18 und die abgereicherte Lösung 8 getrennt, die in einem Sammler 25 mit der aus dem Hochdruckniveau 2 abgeführten abgereicherten Lösung 8 zusammengeführt wird. Darüber hinaus entspricht die zweite bekannte Absorptionsmaschine der ersten bekannten Absorptionsmaschine 1 gemäß Figur 1a.

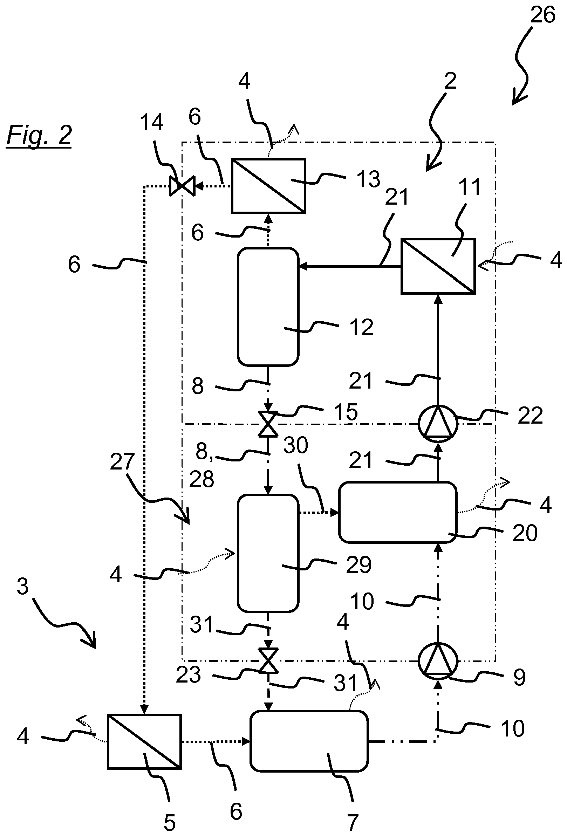

Figur 2 skizziert eine erfindungsgemäße Absorptionsmaschine 26. Das Mitteldruckniveau 27 der erfindungsgemäßen Absorptionsmaschine 26 erweitert - wie in der zweiten bekannten Absorptionsmaschine - die erste bekannte Absorptionsmaschine 1 an der Schnittstelle zwischen Hochdruckniveau 2 und Niederdruckniveau 3: Die aus dem Hochdruckniveau 2 abgeführte abgereicherte Lösung 8 wird als Spenderlösung 28 durch das Hochdrucklösungsventil 15 auf Mitteldruck entspannt und in dem Mitteldruckabscheider 29 in das Spenderarbeitsmittel 30 und die verbleibende arme Lösung 31 getrennt, die über das Mitteldrucklösungsventil 23 entspannt und in den Absorber geführt wird. Darüber hinaus entspricht die erfindungsgemäße Absorptionsmaschine 26 der zweiten bekannten Absorptionsmaschine gemäß Figur 1 b.

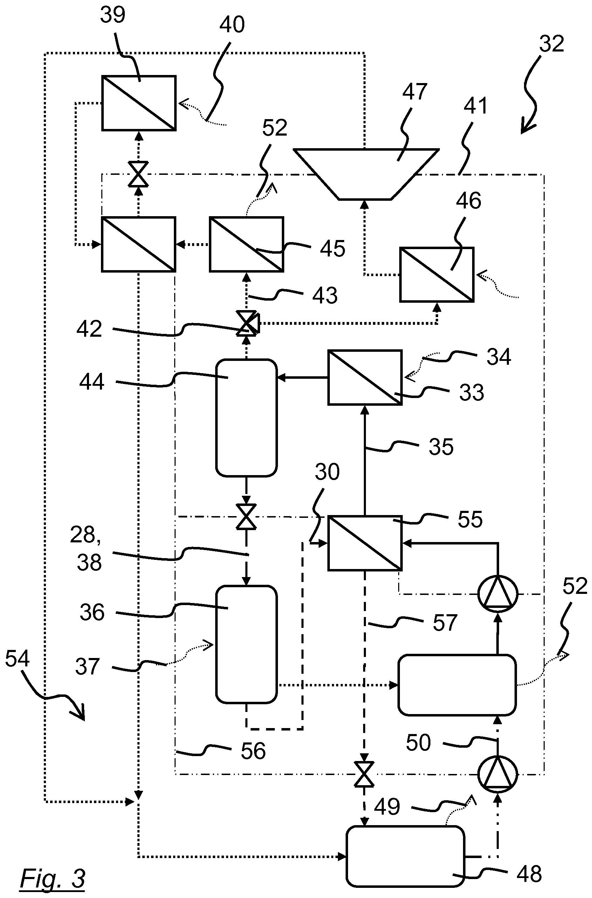

Die in Figur 3 skizzierte zweite erfindungsgemäße Absorptionsmaschine 32 entspricht im Wesentlichen der ersten erfindungsgemäßen Absorptionsmaschine 26: In der zweiten Absorptionsmaschine 32 wird Niedertemperaturabwärme aus einem nicht dargestellten Blockheizkraftwerk technisch genutzt:

Ein nicht dargestellter Kühlwasserstrom aus dem Blockheizkraftwerk tritt zunächst mit einer Temperatur von 95 °C in den Austreiber 33 ein. Ein erster Wärmestrom 34 aus dem Kühlwasserstrom erhitzt hier die reiche Lösung 35 von 76 *°C* auf 95 *°C.* Der Kühlwasserstrom tritt dann mit 85 *°C* in dem Mitteldruckabscheider 36 ein. Dort erhitzt ein weiterer Wärmestrom 37 die mit 82 °C einströmende abgereicherte Lösung 38. Der Kühlwasserstrom strömt aus dem Mitteldruckabscheider 36 mit einer Temperatur von 80 °C zurück in das Blockheizkraftwerk.

Die Leistung der Absorptionsmaschine 32 wird genutzt, um im Verdampfer 39 einem nicht dargestellten Kühlmittel einen Wärmestrom 40 zu entziehen, und es von -3 *°C* auf -8 *°C* zu kühlen.

Die zweite Absorptionsmaschine 32 ist darüber hinaus eine Wärmekraftmaschine: Auf dem Hochdruckniveau 41 weist die zweite Absorptionsmaschine 32 ein Dreiwegeventil 42 auf, mittels dessen das nicht zum Kühlen benötigte gasförmige Arbeitsmittel 43 aus dem Hochdruckabscheider 44 vor dem Kondensator 45 ausgekoppelt wird.

In einem Überhitzer 46 heizt ein Abgasstrom aus dem Blockheizkraftwerk das ausgekoppelte Arbeitsmittel 43 von 95 *°C* auf 130 *°C* auf. Anschließend gibt der Abgasstrom noch in einem Abgaswärmetauscher Wärme an den aus dem Blockheizkraftwerk kommenden Kühlwasserstrom ab. Der Abgasstrom und der Abgaswärmetauscher sind nicht dargestellt.

Das überhitzte Arbeitsmittel 43 wird in einer Turbine 47 auf den Niederdruck entspannt und kühlt dabei auf 52 *°C* ab. Die Turbine 47 treibt einen nicht dargestellten Generator an und erzeugt elektrischen Strom.

In den Niederdruckabsorber 48 wird ein nicht dargestellter Kühlwasserstrom mit 25 *°C* eingeleitet, nimmt dort einen Wärmestrom 49 aus der angereicherten Lösung 50 auf und tritt mit 28 *°C* wieder aus. Die angereicherte Lösung 50 verlässt den Niederdruckabsorber 48 mit 29 *°C.* Anschließend wird der Kühlwasserstrom geteilt und die Teilströme nehmen in dem Kondensator 45 und in dem Mitteldruckabsorber 51 weitere Wärmeströme 52 auf. Die reiche Lösung 35 verlässt den Mitteldruckabsorber 51 mit 45 *°C.* Die Teilströme werden dann wieder zusammengeführt und mit etwa 30 *°C* in einen Kühlturm abgeleitet. Der Kühlwasserstrom und seine Teilströme sowie der Kühlturm sind nicht dargestellt.

Die zweite erfindungsgemäße Absorptionsmaschine 32 weist einen weiteren Wärmetauscher 53 zwischen dem Hochdruckniveau 41 von 13 *bar* und dem Niederdruckniveau 54 von 2,8 *bar* auf, Hier wird das zur Kühlung genutzte flüssige Arbeitmittel aus dem Kondensator 45 von 32 *°C* auf 5 *°C* abgekühlt und dabei das gasförmige Arbeitsmittel 43 aus dem Verdampfer 39 von 9 *°C* auf 10 *°C* erwärmt.

Weiterhin weist die zweite erfindungsgemäße Absorptionsmaschine 32 einen weiteren Wärmetauscher 55 zwischen dem Hochdruckniveau 41 und dem Mitteldruckniveau 56 von 8,5 *bar* auf. Hier wird die arme Lösung 57 aus dem Mitteldruckabscheider 36 von 97 °C auf 48 *°C* abgekühlt und dabei die reiche Lösung 35 vor dem Austreiber 33 vorgewärmt.

In einem weiteren, nicht dargestellten Wärmetauscher auf dem Hochdruckniveau 41 kann zusätzlich die abgereicherte Lösung 38 aus dem Hochdruckabscheider 44 Wärme auf die reiche Lösung 35 vor dem Austreiber 33 übertragen. Ergänzend kann in einer solchen erfindungsgemäßen Absorptionsmaschine 32 mittels weiterer Wärmetauscher Wärme aus der abgereicherten Lösung auf dem Mitteldruckniveau 56 beispielsweise in einen Wärmeträger übertragen werden, nachdem dieser im Austreiber 33 Wärme an die reiche Lösung 35 abgegeben hat.

Die zusätzlichen Wärmetauscher 53, 55 erhöhen weiter die energetische Effizienz der zweiten erfindungsgemäßen Absorptionsmaschine 32.

In den Figuren sind
- 1: Absorptionsmaschine
- 2: Hochdruckniveau
- 3: Niederdruckniveau
- 4: Wärmestrom
- 5: Verdampfer
- 6: Arbeitsmittel
- 7: Niederdruckabsorber
- 8: abgereicherte Lösung
- 9: Niederdruckpumpe
- 10: angereicherte Lösung
- 11: Austreiber
- 12: Hochdruckabscheider
- 13: Kondensator
- 14: Hochdruckarbeitsmittelventil
- 15: Hochdrucklösungsventil
- 16: Mitteldruckniveau
- 17: Mitteldruckabscheider
- 18: Spenderarbeitsmittel
- 19: Spenderlösung
- 20: Mitteldruckabsorber
- 21: reiche Lösung
- 22: Mitteldruckpumpe
- 23: Mitteldrucklösungsventil
- 24: Austreiber
- 25: Sammler
- 26: Absorptionsmaschine
- 27: Mitteldruckniveau
- 28: Spenderlösung
- 29: Mitteldruckabscheider
- 30: Spenderarbeitsmittel
- 31: arme Lösung
- 32: Absorptionsmaschine
- 33: Austreiber
- 34: Wärmestrom
- 35: reiche Lösung
- 36: Mitteldruckabscheider
- 37: Wärmestrom
- 38: abgereicherte Lösung
- 39: Verdampfer
- 40: Wärmestrom
- 41: Hochdruckniveau
- 42: Dreiwegeventil
- 43: Arbeitsmittel
- 44: Hochdruckabscheider
- 45: Kondensator
- 46: Überhitzer
- 47: Turbine
- 48: Niederdruckabsorber
- 49: Wärmestrom
- 50: angereicherte Lösung
- 51: Mitteldruckabsorber
- 52: Wärmestrom
- 53: Wärmetauscher
- 54: Niederdruckniveau
- 55: Wärmetauscher
- 56: Mitteldruckniveau
- 57: arme Lösung

## Patentansprüche

1. Absorptionsprozess zur Nutzung von Abwärme aus einem Blockheizkraftwerk, wobei
a. auf einem Niederdruckniveau (3, 54) eine arme wässrige Lösung (31) mit verdampften Ammoniak als Arbeitsmittel (6, 43) angereichert und die angereicherte Lösung (10, 50) von dem Niederdruckniveau (3, 54) auf ein Mitteldruckniveau (27, 56) verdichtet wird,
b. auf dem Mitteldruckniveau (27, 56) einer wässrigen Spenderlösung (33) ein erster Wärmestrom (4, 37) aus der Abwärme zugeführt, gasförmiges Ammoniak als Spenderarbeitsmittel (30) aus der Spenderlösung (28) abgeschieden, die angereicherte Lösung (10, 50) mit dem Spenderarbeitsmittel (30) zu einer reichen Lösung (21) weiter angereichert, die reiche Lösung (21, 35) von dem Mitteldruckniveau (27, 56) auf ein Hochdruckniveau (2, 41) verdichtet und die arme Lösung (31, 57) auf das Niederdruckniveau (3, 54) entspannt wird, und
c. auf dem Hochdruckniveau (2, 41) die reiche Lösung (21, 35) mittels eines zweiten Wärmestroms (4, 34) aus der Abwärme erhitzt und in das Arbeitsmittel (6, 43) in gasförmigem Aggregatzustand und eine abgereicherte Lösung (8, 38) getrennt, das gasförmige Arbeitsmittel (6, 43) auf das Niederdruckniveau (3, 54) entspannt und die abgereicherte Lösung (8, 38) auf das Mitteldruckniveau (27, 56) entspannt wird,
***dadurch gekennzeichnet, dass*** auf dem Mitteldruckniveau (27, 56) die abgereicherte Lösung (8, 38) als Spenderlösung (28) in das Spenderarbeitsmittel (30) und die arme Lösung (31, 57) getrennt wird.

2. Absorptionsprozess nach dem vorgenannten Anspruch, ***dadurch gekennzeichnet, dass*** Wärme aus der abgereicherten Lösung (8) auf dem Mitteldruckniveau (27, 56) in die reiche Lösung (21, 35) auf dem Hochdruckniveau (2, 41) übertragen wird.

3. Absorptionsprozess nach einem der vorgenannten Ansprüche, ***dadurch gekennzeichnet, dass*** auf dem Mitteldruckniveau (27, 56) der abgereicherten Lösung (8) Wärme zugeführt wird.

4. Absorptionsprozess nach einem der vorgenannten Ansprüche, ***dadurch gekennzeichnet, dass*** auf dem Mitteldruckniveau (27, 56) ein Bypassstrom der reichen Lösung (21) in die angereicherte Lösung (10, 50) geführt wird.

5. Absorptionsprozess nach einem der vorgenannten Ansprüche, ***dadurch gekennzeichnet, dass*** auf dem Mitteldruckniveau (27, 56) aus der angereicherten Lösung (10, 50) Wärme abgeführt wird.

6. Absorptionsprozess nach einem der vorgenannten Ansprüche, ***dadurch gekennzeichnet, dass*** das gasförmige Arbeitsmittel (6, 43) auf dem Hochdruckniveau (2, 41) abgekühlt und verflüssigt, von dem Hochdruckniveau (2, 41) auf das Niederdruckniveau (3, 54) entspannt und auf dem Niederdruckniveau (3, 54) erhitzt und verdampft wird.

7. Absorptionsprozess nach einem der vorgenannten Ansprüche, ***dadurch gekennzeichnet, dass*** das gasförmige Arbeitsmittel (43) in einer Turbine (47) von dem Hochdruckniveau (41) auf das Niederdruckniveau (54) entspannt wird.

8. Absorptionsprozess nach dem vorgenannten Anspruch, ***dadurch gekennzeichnet, dass*** die Turbine (47) einen Generator antreibt.

9. Absorptionsprozess nach einem der Ansprüche 7 oder 8, ***dadurch gekennzeichnet, dass*** das gasförmige Arbeitsmittel (43) vor dem Entspannen überhitzt wird.

10. Absorptionsmaschine (26, 32) zur Nutzung von Abwärme aus einem Blockheizkraftwerk, umfassend
a. auf einem Niederdruckniveau (3, 54) einen Niederdruckabsorber (7, 48) zum Anreichern einer armen wässrigen Lösung (31) mit verdampften Ammoniak als Arbeitsmittel (6, 43) und eine Niederdruckpumpe (9) zum Verdichten der angereicherten Lösung (10, 50) von dem Niederdruckniveau (3, 54) auf ein Mitteldruckniveau (27, 56),
b. auf dem Mitteldruckniveau (27, 56) einen Mitteldruckabscheider (29, 36) zum Abscheiden gasförmigen Ammoniaks als Spenderarbeitsmittels (30) aus der Spenderlösung (28) durch Zuführen eines ersten Wärmestroms (4, 37) aus der Abwärme, einen Mitteldruckabsorber (20, 51) zum weiteren Anreichern der angereicherten Lösung (10, 50) mit dem Spenderarbeitsmittel (30) zu einer reichen Lösung (21), eine Mitteldruckpumpe (22) zum Verdichten der reichen Lösung (21) von dem Mitteldruckniveau (27, 56) auf ein Hochdruckniveau (2, 41) und ein Mitteldrucklösungsventil (23) zum Entspannen der armen Lösung (31) auf das Niederdruckniveau (3, 54), und
c. auf dem Hochdruckniveau (2, 41) einen Austreiber (11, 33) zum Erhitzen der reichen Lösung (21) mittels eines zweiten Wärmestroms (4, 34) aus der Abwärme, einen Hochdruckabscheider (12, 44) zum Trennen der reichen Lösung (21) in das Arbeitsmittel (6, 43) in gasförmigem Aggregatzustand und eine abgereicherte Lösung (8, 38) und ein Hochdrucklösungsventil (15) zum Entspannen der abgereicherten Lösung (8) auf das Mitteldruckniveau (27, 56),
***dadurch gekennzeichnet, dass*** in dem Mitteldruckabscheider (29, 36) die abgereicherte Lösung (8, 38) als Spenderlösung (28) in das Spenderarbeitsmittel (30) und die arme Lösung (31, 57) getrennt wird.

11. Absorptionsmaschine (26, 32) nach dem vorgenannten Anspruch, ***gekennzeichnet durch*** einen Kondensator (13, 45) auf dem Hochdruckniveau (2, 41) zum Abkühlen und Verflüssigen des gasförmigen Arbeitsmittels (6, 43), ein Hochdruckarbeitsmittelventil (14) zum Entspannen des verflüssigten Arbeitsmittels (6, 43) auf das Niederdruckniveau (3, 54) und einen Verdampfer (5, 39) auf dem Niederdruckniveau (3, 54) zum Erhitzen und Verdampfen des flüssigen Arbeitsmittels (6, 43).

12. Absorptionsmaschine (32) nach einem der Ansprüche 10 oder 11, ***gekennzeichnet durch*** eine Turbine (47) zum Entspannen des gasförmigen Arbeitsmittels (43) von dem Hochdruckniveau (41) auf das Niederdruckniveau (54).

13. Absorptionsmaschine (32) nach dem vorgenannten Anspruch, ***gekennzeichnet durch*** einen Generator zum Erzeugen elektrischer Energie aus einer Rotation der Turbine (47).

14. Absorptionsmaschine (32) nach einem der Ansprüche 12 oder 13, ***gekennzeichnet durch*** einen Überhitzer (46) zum Überhitzen des gasförmigen Arbeitsmittels (43) auf dem Hochdruckniveau (41).

## Claims

1. An absorption process for purposes of utilising waste heat from a combined heat and power plant, wherein
a. at a low pressure level (3, 54) a weak aqueous solution (31) is concentrated with evaporated ammonia as a working medium (6, 43), and the concentrated solution (10, 50) is compressed from the low pressure level (3, 54) to a medium pressure level (27, 56),
b. at the medium pressure level (27, 56) of an aqueous donor solution (33), a first heat flow (4, 37) is supplied from the waste heat, gaseous ammonia is deposited as a donor working medium (30) from the donor solution (28), the concentrated solution (10, 50) is further concentrated with the donor working medium (30) to form a rich solution (21), the rich solution (21, 35) is compressed from the medium pressure level (27, 56) to a high pressure level (2, 41), and the weak solution (31, 57) is expanded to the low pressure level (3, 54), and
c. at the high pressure level (2, 41) the rich solution (21, 35) (8, 38) is heated by means of a second heat flow (4, 34) from the waste heat, and is separated into the working medium (6, 43) in a gaseous aggregate state and a depleted solution (8, 38), the gaseous working medium (6, 43) is expanded to the low pressure level (3, 54) and the depleted solution (8, 38) is expanded to the medium pressure level (27, 56),
**characterised in that**, at the medium pressure level (27, 56) the depleted solution (8, 38) as a donor solution (28) is separated into the donor working medium (30) and the weak solution (31, 57).

2. The absorption process in accordance with the above-cited claim, **characterised in that**, heat is transferred from the depleted solution (8) at the medium pressure level (27, 56) into the rich solution (21, 35) at the high pressure level (2, 41).

3. The absorption process in accordance with one of the above-cited claims, **characterised in that**, heat is supplied at the medium pressure level (27, 56) of the depleted solution (8).

4. The absorption process in accordance with one of the above-cited claims, **characterised in that**, at the medium pressure level (27, 56) a bypass flow of the rich solution (21) is fed into the concentrated solution (10, 50).

5. The absorption process in accordance with one of the above-cited claims, **characterised in that**, at the medium pressure level (27, 56) heat is extracted from the concentrated solution (10, 50).

6. The absorption process in accordance with one of the above-cited claims, **characterised in that**, the gaseous working medium (6, 43) at the high pressure level (2, 41) is cooled down and liquefied, expanded from the high pressure level (2, 41) to the low pressure level (3, 54), and at the low pressure level (3, 54) is heated and evaporated.

7. The absorption process in accordance with one of the above-cited claims, **characterised in that**, the gaseous working medium (43) in a turbine (47) is expanded from the high pressure level (41) to the low pressure level (54).

8. The absorption process in accordance with the above-cited claim, **characterised in that**, the turbine (47) drives a generator.

9. The absorption process in accordance with one of the claims 7 or 8, **characterised in that**, the gaseous working medium (43) is superheated before the expansion.

10. An absorption machine (26, 32) for purposes of utilising waste heat from a combined heat and power plant, comprising
a. at a low pressure level (3, 54) a low pressure absorber (7, 48) for purposes of concentrating a weak aqueous solution (31), with evaporated ammonia as a working medium (6, 43) and a low pressure pump (9) for purposes of compressing the concentrated solution (10, 50) from the low pressure level (3, 54) to a medium pressure level (27, 56),
b. at the medium pressure level (27, 56) a medium pressure separator (29, 36) for purposes of separating gaseous ammonia as a donor working medium (30) from the donor solution (28) by the supply of a first heat flow (4, 37) from the waste heat, a medium pressure absorber (20, 51) for purposes of further concentration of the concentrated solution (10, 50) with the donor working medium (30) to form a rich solution (21), a medium pressure pump (22) for purposes of compressing the rich solution (21) from the medium pressure level (27, 56) to a high pressure level (2, 41), and a medium pressure solution valve (23) for purposes of expanding the weak solution (31) to the low pressure level (3, 54), and
c. at the high pressure level (2, 41) an ejector (11, 33) for purposes of heating the rich solution (21) by means of a second heat flow (4, 34) from the waste heat, a high pressure separator (12, 44) for purposes of separating the rich solution (21) into the working medium (6, 43) in a gaseous aggregate state, and a depleted solution (8, 38), and a high pressure solution valve (15) for purposes of expanding the depleted solution (8) to the medium pressure level (27, 56),
**characterised in that**, in the medium pressure separator (29, 36) the depleted solution (8, 38) as a donor solution (28) is separated into the donor working medium (30) and the weak solution (31, 57).

11. The absorption machine (26, 32) in accordance with the above-cited claim, **characterised by** a condenser (13, 45) at the high pressure level (2, 41) for purposes of cooling and liquefaction of the gaseous working medium (6, 43), a high pressure working medium valve (14) for purposes of expanding the liquefied working medium (6, 43) to the low pressure level (3, 54), and an evaporator (5, 39) at the low pressure level (3, 54) for purposes of heating and evaporation of the liquefied working medium (6, 43).

12. The absorption machine (32) in accordance with one of the claims 10 or 11, **characterised by** a turbine (47) for purposes of expanding the gaseous working medium (43) from the high pressure level (41) to the low pressure level (54).

13. The absorption machine (32) in accordance with the above-cited claim, **characterised by** a generator for purposes of generating electrical energy from the rotation of the turbine (47).

14. The absorption machine (32) in accordance with one of the claims 12 or 13, **characterised by** a superheater (46) for purposes of superheating the gaseous working medium (43) at the high pressure level (41).

## Revendications

1. Processus d'absorption pour l'utilisation de la chaleur perdue d'une centrale de cogénération,
a. à un niveau à basse pression (3, 54), une solution aqueuse pauvre (31) étant enrichie à l'ammoniac vaporisé en tant que milieu actif (6, 43) et la solution enrichie (10, 50) étant compressée du niveau à basse pression (3, 54) à un niveau à moyenne pression (27, 56),
b. au niveau à moyenne pression (27, 56) d'une solution de distribution aqueuse (33), un premier flux thermique (4, 37) étant acheminé de la chaleur perdue, de l'ammoniac gazeux étant séparé de la solution de distribution (28) en tant que milieu actif de distribution (30), la solution enrichie (10, 50) continuant d'être enrichie avec le milieu actif de distribution (30) en une solution riche (21), la solution riche (21, 35) étant compressée du niveau à moyenne pression (27, 56) à un niveau à haute pression (2, 41) et la solution pauvre (31, 57) étant détendue au niveau à basse pression (3, 54), et
c. au niveau à haute pression (2, 41), la solution riche (21, 35) étant chauffée à partir de la chaleur perdue au moyen d'un deuxième flux thermique (4, 34) et une solution appauvrie (8, 38) étant séparée dans le milieu actif (6, 43) à l'état d'agrégat gazeux, le milieu actif gazeux (6, 43) étant détendu au niveau à basse pression (3, 54) et la solution appauvrie (8, 38) étant détendue au niveau à moyenne pression (27, 56)
**caractérisé en ce qu'**au niveau à moyenne pression (27, 56), la solution appauvrie (8, 38) étant séparée en tant que solution de distribution (28) dans le milieu actif de distribution (30) et la solution pauvre (31, 57).

2. Processus d'absorption selon la revendication précédente, **caractérisé en ce que** la chaleur de la solution appauvrie (8) au niveau à moyenne pression (27, 56) est transférée dans la solution riche (21, 35) au niveau à haute pression (2, 41).

3. Processus d'absorption selon l'une quelconque des revendications précédentes, **caractérisé en ce qu'**au niveau à moyenne pression (27, 56) de la chaleur est apportée à la solution enrichie (8).

4. Processus d'absorption selon l'une quelconque des revendications précédentes, **caractérisé en ce qu'**au niveau à moyenne pression (27, 56) un flux de dérivation de la solution riche (21) est dirigé dans la solution enrichie (10, 50).

5. Processus d'absorption selon l'une quelconque des revendications précédentes, **caractérisé en ce qu'**au niveau à moyenne pression (27, 56) de la chaleur est enlevée de la solution enrichie (10, 50).

6. Processus d'absorption selon l'une quelconque des revendications précédentes, **caractérisé en ce que** le milieu actif gazeux (6, 43) est refroidi et fluidifié au niveau à haute pression (2, 41), détendu du niveau à haute pression (2, 41) au niveau à basse pression (3, 54) et chauffé et vaporisé au niveau à basse pression (3, 54).

7. Processus d'absorption selon l'une quelconque des revendications précédentes, **caractérisé en ce que** le milieu actif gazeux (43) est détendu dans une turbine (47) du niveau à haute pression (41) au niveau à basse pression (54).

8. Processus d'absorption selon la revendication précédente, **caractérisé en ce que** la turbine (47) entraîne un générateur.

9. Processus d'absorption selon l'une quelconque des revendications 7 ou 8, **caractérisé en ce que** le milieu actif gazeux (43) est surchauffé avant la détente.

10. Machine d'absorption (26, 32) pour l'utilisation de la chaleur perdue d'une centrale de cogénération, comprenant
a. à un niveau à basse pression (3, 54), un absorbeur à basse pression (7, 48) pour enrichir une solution aqueuse pauvre (31) avec de l'ammoniac vaporisé en tant que milieu actif (6, 43) et une pompe à basse pression (9) pour compresser la solution enrichie (10, 50) du niveau à basse pression (3, 54) à un niveau à moyenne pression (27, 56),
b. au niveau à moyenne pression (27, 56), un séparateur à moyenne pression (29, 36) pour séparer l'ammoniac gazeux en tant que milieu actif de distribution (30) de la solution de distribution (28) par apport d'un premier flux thermique (4, 37) depuis la chaleur perdue, un absorbeur à moyenne pression (20, 51) pour continuer à enrichir la solution enrichie (10, 50) avec le milieu actif de distribution (30) en une solution riche (21), une pompe à moyenne pression (22) pour compresser la solution riche (21) du niveau à moyenne pression (27, 56) à un niveau à haute pression (2, 41) et une soupape de solution à moyenne pression (23) pour détendre la solution pauvre (31) au niveau à basse pression (3, 54), et
c. au niveau à haute pression (2, 41), un extracteur (11, 33) pour chauffer la solution riche (21) au moyen d'un deuxième flux thermique (4, 34) à partir de la chaleur perdue, un séparateur à haute pression (12, 44) pour séparer la solution riche (21) dans le milieu actif (6, 43) à l'état d'agrégat gazeux et dans une solution appauvrie (8, 38) et une soupape de solution à haute pression (15) pour détende la solution appauvrie (8) au niveau à moyenne pression (27, 56),
**caractérisée en ce que** la solution appauvrie (8, 38) en tant que solution de distribution (28) dans le milieu actif de distribution (30) et la solution pauvre (31, 57) sont séparées dans le séparateur à moyenne pression (29, 36).

11. Machine d'absorption (26, 32) selon la revendication précédente, **caractérisé par** un condensateur (13, 45) au niveau à haute pression (2, 41) pour refroidir et fluidifier le milieu actif gazeux (6, 43), une soupape de milieu actif à haute pression (14) pour détendre le milieu actif fluidifié (6, 43) au niveau à basse pression (3, 54) et un évaporateur (5, 39) au niveau à basse pression (3, 54) pour chauffer et évaporer le milieu actif liquide (6, 43).

12. Machine d'absorption (32) selon l'une quelconque des revendications 10 ou 11, **caractérisé par** une turbine (47) pour détendre le milieu actif gazeux (43) du niveau à haute pression (41) au niveau à basse pression (54).

13. Machine d'absorption (32) selon la revendication précédente, **caractérisé par** un générateur pour générer de l'énergie électrique à partir d'une rotation de la turbine (47).

14. Machine d'absorption (32) selon l'une des revendications 12 ou 13, **caractérisé par** un surchauffeur (46) pour surchauffer le milieu actif gazeux (43) au niveau à haute pression (41).
